# EUROPEAN PATENT SPECIFICATION

(11) **EP 3 519 363 B1**
(45) Date of publication and mention of the grant of the patent: **25.03.2020**
(21) Application number: 17768806.6
(22) Date of filing: 19.09.2017
(51) Int. Cl.: C02F 1/56, B01D 21/01, C11D 1/90, C02F 1/52

(54) **WATER CLARIFICATION COMPOSITION CONTAINING AMPHOTERIC POLYMER**
WASSERKLÄRUNGSZUSAMMENSETZUNG MIT AMPHOTEREM POLYMER
COMPOSITION DE CLARIFICATION DE L'EAU CONTENANT UN POLYMÈRE AMPHOTÈRE

(30) Priority: 03.10.2016 EP 16192021
(43) Date of publication of application: 07.08.2019
(73) Proprietor: Unilever N.V., 3013 AL Rotterdam (NL); Unilever PLC, London, Greater London EC4Y 0DY (GB)
(72) Inventor: PRAMANIK, Amitava, Bangalore 560 066 (IN); RAMAN, Srinivasa, Gopalan, Bangalore 560 066 (IN); ROYCHOWDHURY, Sumana, Bangalore 560 066 (IN)
(74) Representative: Reijns, Tiemen Geert Pieter
(86) International application number: PCT/EP2017/073659
(87) International publication number: WO 2018/065210

(56) References cited:
- EP-A1- 2 679 546
- WO-A1-2014/202756
- WO-A2-2009/134996
- US-A1- 2004 168 980
- US-B1- 6 590 051

## Description

### Field of the invention

The present invention relates to a water clarification composition comprising:
(i) 0.1 to 50% by weight of dry matter of anionic polymeric flocculant;
(ii) 0.4 to 90% by weight of dry matter of an amphoteric polymer having a molecular weight of at least 5,000 Da, said amphoteric polymer being characterized in that at least 30%, preferably at least 50% of the monomeric units of the amphoteric polymer are betaine units represented by the following formula (I):

   H₂C=C(R¹)-C(O)O-(CH₂)ₙ-N⁺(R²)(R³)-(CH₂)ₚ-X

   where:
   - R¹ represents a hydrogen atom or a linear or branched C₁ to C₆ alkyl group;
   - R² and R³, independently of each other, represent an alkyl, hydroxyalkyl or aminoalkyl group in which the alkyl group is a linear or branched C₁ to C₆ alkyl;
   - n is an integer in the range of 1 to 4;
   - p is an integer in the range of 2 to 8;
   - X represents COO⁻, SO₃⁻ or OSO₃⁻; and
(iii) 0 to 95% by weight of dry matter of inert filler;
wherein the combination of the anionic polymer flocculant, the amphoteric polymer and the inert filler constitutes at least 50 wt.%, preferably at least 70 % by weight of the water clarification composition, wherein the amphoteric polymer exists in a ratio to the anionic polymer flocculant, and wherein the ratio is selected from 3:1, 4:1, or 5:1, and wherein the inert filler contains at least 80% by weight of one or more water-soluble components.

The present invention also relates to a method of purifying water using the said water clarification composition.

### Background of the invention

There is an increasing need to provide efficient and cost effective means to improve the quality of water at the point of use. For example, groundwater is a major source of drinking water in the home, especially in developing countries, but groundwater is often contaminated with sediments and other particulates, which makes the water turbid. Not only is turbid water less appetizing to drink, in some cases it can harbour harmful bacteria and the suspended solids may also damage appliances which use such water. One way of removing turbidity in water is by precipitating suspended matter in water using a flocculent like alum (potassium aluminum sulfate dodecahydrate or aluminum sulphate). When turbid water is treated with a flocculent such as alum, the electrostatic repellent forces keeping the solids suspended is neutralized and the solids agglomerate to form larger particles known as 'flocs' which settle slowly down to the bottom. Disadvantage of using alum as flocculant is that the performance is substantially affected at lower temperatures and there is a poorer efficiency towards attracting organic suspended solids. A relatively large dose becomes necessary. Adding excess coagulant beyond charge-neutralization results in the formation of metal coagulant precipitates and is termed sweep flocculation. Metal coagulants are for example metal hydroxides (e.g., Al(OH)₃ or Fe(OH)₃ (ferric chloride). Al-based salts or Fe-based salts, are added in sufficient amount so that they form amorphous Al(OH)₃ or Fe(OH)₃ particles. These amorphous particles entrap suspended solids leading to clarification of water. Al(OH)₃ or Fe(OH)₃ particles with entrapped suspended solids called sweep flocs, have a size in the range of 100 µm or below. At this size the sweep flocs are still difficult to separate from the water by, e.g. filtration or decantation. Moreover, the kinetics of settling of the sweep flocs is very slow. Although ferric chloride is good at attracting inorganic solids, a lower efficiency for organic solids is observed.

It is known in the art to improve the kinetics of settling down by adding a polymer flocculant, such as polyacrylamides (including acrylamide-acrylate copolymers). This type of flocculation encompasses the addition of a polymer flocculant with a molecular weight of at least 100 kDa. These polymers are believed to adsorb on the sweep flocs and thereby bring the sweep flocs together to form bigger and stronger flocs. This phenomenon is known as "bridging flocculation". This bridging mechanism helps in increasing the settling velocity of the flocs and contributes therefore to faster clarification of water.

US 2014/158633 AA (PSMG LLC) describes a flocculant composition comprising a blend of a particulate polyethylene oxide and a particulate polyacrylamide.

The order of these processes is regulated by the differences in dissolution kinetics; the electrolyte flocculants are readily soluble, in contrast to the polymer flocculants. Betaine-based amphoteric polymers have been applied in detergent compositions. US 8,883,262 BB (RHODIA RECHERCHES AND TECH, 2014) describes a hard surface cleaning composition comprising a combination of (a) a sulphobetaine or carboxybetaine zwitterionic polymer and (b) at least one cationic polymer. The US patent further describes hard surface cleaning compositions containing a combination of (a) a phosphobetaine zwitterionic polymer and (b) at least one anionic polymer. Further similar compositions are described in US 2004/0168980 A1 and WO 2009/134996 A2.

### Summary of the invention

The present inventors have developed a water clarification composition that is very effective at removing turbidity in water. The clarification composition of the present invention comprises an anionic polymeric flocculant in combination with an amphoteric polymer having a molecular weight of at least 5,000 Da.

More specifically, the present invention provides A water clarification composition comprising:
(i) 0.1 to 50% by weight of dry matter of anionic polymeric flocculant;
(ii) 0.4 to 90% by weight of dry matter of an amphoteric polymer having a molecular weight of at least 5,000 Da, said amphoteric polymer being characterized in that at least 30%, preferably at least 50% of the monomeric units of the amphoteric polymer are betaine units represented by the following formula (I):

   H₂C=C(R¹)-C(O)O-(CH₂)ₙ-N⁺(R²)(R³)-(CH₂)ₚ-X

   where:
   - R¹ represents a hydrogen atom or a linear or branched C₁ to C₆ alkyl group;
   - R² and R³, independently of each other, represent an alkyl, hydroxyalkyl or aminoalkyl group in which the alkyl group is a linear or branched C₁ to C₆ alkyl;
   - n is an integer in the range of 1 to 4;
   - p is an integer in the range of 2 to 8;
   - X represents COO⁻, SO₃⁻ or OSO₃⁻ ; and
(iii) 0 to 95% by weight of dry matter of inert filler;
wherein the combination of the anionic polymer flocculant, the amphoteric polymer and the inert filler constitutes at least 50 % by weight, preferably at least 70 % by weight of the water clarification composition, wherein the amphoteric polymer exists in a ratio to the anionic polymer flocculant, and wherein the ratio is selected from 3:1, 4:1, or 5:1, and wherein the inert filler contains at least 80% by weight of one or more water-soluble components.

It has been found that the combination of an anionic polymer and an amphoteric polymer according to formula (I) provides excellent settling kinetics when turbid water is clarified, even in the absence of metal flocculants and metal coagulants.

The present invention also relates to the use of the water clarification composition and to a process for the clarification of water using the water clarification comparison of the present invention.

### Detailed description of the invention

The term 'flocculation' as used herein refers to a process of contact and adhesion whereby the particles of a dispersion form larger-size clusters.

The term "turbidity" as used herein refers to the cloudiness or haziness of a fluid caused by large number of individual particles.

The unit "NTU" as used herein refers to Nephelometric Turbidity Units (NTU), as measured by the nephelometer, Turbiquant 2100T, manufactured by Merck. The nephelometer is preferably calibrated by using the standard formazin solutions as recommended by the instrument manufacturer. The nephelometer measures the propensity of particles to scatter a light beam focused on them.

The term "inert filler" as used herein refers to particulate component(s) in the water clarification composition that do not significantly contribute to the clarification of turbid water.

The term "polyacrylate" as used herein, unless otherwise indicated, refers to a polymer derived from ethylenically unsaturated monomers having at least one carboxylic function, such as ethylenically unsaturated alpha, beta carboxylic acids or corresponding anhydrides such as acrylic, methacrylic and maleic acids or anhydrides, fumaric acid, itaconic acid, N-methacroyl alanine, N-acryloylglycine and water soluble salts thereof. In the context of the present invention, the term "polyacrylate" encompasses polyacrylates as well as substituted polyacrylates, such as poly(methacrylates).

The term "polyacrylamide" as used herein, unless indicated otherwise, refers to a polymer derived from acrylamide, and derivatives thereof (such as N,N-dimethacrylamide and N-isopropylacrlyamide) and/or methacrylamide and derivatives thereof.

In accordance with a preferred embodiment, the water clarification composition comprises, calculated by weight of dry matter:
- 0.2 to 10 % by weight, more preferably 0.5 to 5 % by weight of the anionic polymeric flocculant;
- 0.6 to 50 % by weight, more preferably 1 to 10 % by weight of the amphoteric polymer;
- 45 to 99 % by weight, more preferably 70 to 97 % by weight filler.

In an embodiment, the amphoteric polymer exists in a ratio to the anionic polymer flocculant, where the ratio is selected from 3:1, 4:1, or 5:1.

The water clarification composition according to the present invention may be provided, for instance, in the form of a solid (e.g. a powder or tablet), a paste or a gel. In accordance with a preferred embodiment, the water clarification composition is a powder.

The water clarification composition preferably is a powder a powder having a mass weighted mean particle size in the range of 10 to 100 micrometers, more preferably in the range of 50 to 90 micrometers.

The anionic polymeric flocculant employed in accordance with the present invention is preferably selected from anionic polyacrylamide, anionic polyacrylate and combinations thereof. Most preferably, the polymeric flocculant is anionic polyacrylamide.

The anionic polymeric flocculant is preferably a copolymer of acrylamide and one or more anionic monomers selected from acrylic acid, methacrylic acid, 2-acrylamido-2-methylpropane sulphonic acid and salts thereof.

In a preferred embodiment, at least 5%, more preferably 10 to 50% of the monomeric units in the anionic polyacrylamide are anionic monomers selected from acrylic acid, methacrylic acid, 2-acrylamido-2-methylpropane sulphonic acid and salts thereof.

In a preferred embodiment, at least 5%, more preferably 10 to 50% of the monomeric units in the anionic polyacrylamide are selected from methacrylic acid, acrylic acid and salts thereof.

In another preferred embodiment, the anionic polymeric flocculant has molecular weight of at least 100,000 Da. More preferably, the molecular weight of the flocculant is at least 250,000 Da, even more preferably at least 500,000 Da and most preferably at least 1,000,000 Da. It is preferred that the molecular weight of the anionic flocculant does not exceed 20 million Da. For avoidance of doubt, the unit Da (Dalton) as used herein refers to atomic mass unit (amu, the less commonly used SI unit).

The filler preferably comprises a coating that contains the anionic polymeric flocculant and/or the amphoteric polymer. Most preferably, the filler comprises a coating that contains the amphoteric polymer, optionally in combination with the anionic polymeric flocculant. By applying these polymers as part of a coating onto particulate filler rapid dissolution of the polymers can be achieved when the clarification composition is dispersed into water. Furthermore, homogeneous distribution of these polymers throughout the water clarification composition can be realised in this way.

In a preferred embodiment, the amphoteric polymer is a polymer according to formula (I), wherein R¹ represents C₁ to C₃ alkyl. More preferably, R¹ is selected from the group consisting of methyl and ethyl. Most preferably, R¹ represents methyl.

In a further preferred embodiment, the amphoteric polymer is a polymer according to formula (I), wherein R² and R³, independently of each other, represent C₁ to C₃ alkyl. More preferably, R² and R³ are independently selected from the group consisting of methyl and ethyl. Most preferably, R² and R³ represent methyl.

The integer n in formula (I) preferably is in the range of 1 to 4. Most preferably, the integer n is 1.

The integer p in formula (I) preferably is in the range of 2 to 8. Most preferably, the integer p is 2.

X in formula (I) preferably represents COO⁻.

The amphoteric polymer employed in accordance with the present invention can be a hompolymer of a copolymer. Preferably, the amphoteric polymer is a homopolymer. According to the invention, the inert filler contains at least 80 % by weight more preferably at least 90 % by weight and most preferably 100 % by weight of one or more water soluble components. Here the term "water soluble components" refers to components that have a solubility in demineralized water at a temperature of 20 °C of at least 1 g/l, preferably of at least 5 g/l and most preferably of at least 10 g/l.

The one or more water-soluble components are preferably selected from carbohydrates, polymers, electrolytes and combinations thereof. More preferably, the one or more water soluble components are selected from carbohydrates, electrolytes and combinations thereof. Most preferably, carbohydrate is used as a filler. Examples of suitable carbohydrates include monosaccharides, disaccharides, oligosaccharides and combinations thereof. Examples of electrolytes include salts such as sodium chloride, calcium chloride, magnesium chloride, potassium chloride and combinations thereof.

The inert filler preferably has a mass weighted mean particle size in the range of 5 to 500 micrometer, more preferably in the range of 10 to 150 micrometer, most preferably in the range of 50 to 90 micrometer.

The inert filler preferably has a surface area of at least 1 m²/g and a porosity of less than 30 vol.%. Surface area measurements can be done using the BET method (Brunauer et al. "Adsorption of Gases in Multimolecular Layers". Journal of the American Chemical Society (1938) 60(2): 309-319.) Porosity can be measured using mercury porosimetry (http://www.micromeritics.com/Repository/Files/Mercury_Porosemitry_Theory_poster_. pdf)

The clarification composition of the present invention does not require metal salt coagulants to effectively remove turbidity from water. Accordingly, the composition preferably contains less than 0.5 % by weight dry matter of a metal salt coagulant selected from aluminum sulfate, aluminum chloride, polyaluminum chloride, aluminum chlorohydrate, ferric sulfate, ferrous sulfate, ferric chloride and combinations thereof. Advantageously, the composition according to the present invention does not comprise a metal salt easing separation and enhancing the rate of flocculation.

In a second aspect, the present invention relates to the use of an amphoteric polymer as defined herein for clarifying turbid water,

In a third aspect, the present invention relates to a process for clarifying water comprising suspended solids, said process comprising the steps of:
a. dosing the water clarification composition according to the first aspect, in a dose of 0.2 to 3 grams per liter of water to be clarified;
b. dispersing the water clarification composition throughout the water to be clarified to induce the formation of flocs; and,
c. separating the flocs from the water to obtain clarified water.

In the process of the present invention the clarification composition is preferably dosed in a dose of 0.1 to 10 grams per litre water. More preferably the clarification composition is dosed in a dose of 0.5 to 5 grams per litre water and most preferably in a dose of 0.5 to 2 grams per litre water.

Dispersing of the water clarification composition throughout the water to be clarified can be achieved, for instance, by stirring. Stirring in the process of the present invention is preferably performed for at least 10 seconds, more preferably performed for 15 to 60 seconds and most preferably the stirring of the mixture is performed for 15 to 50 seconds. Different patterns of stirring may be followed applied, e.g. stirring-pause-stirring or stirring-pause or variations thereof.

The separation of the precipitate from the water is preferably performed by filtration, decantation and combinations thereof. More preferably the separation of the precipitate from the water is performed by filtration.

Preferably, the turbidity of the water to be clarified is reduced to less than 20 NTU, more preferably to less than 10 NTU by the present process.

Typically, the water to be clarified in the present process has an initial turbidity of 400 NTU or more.

The invention is further illustrated by the following non-limiting examples.

### Examples

### Example 1

### Monomer Synthesis

2-Carboxy-N,N-dimethyl-N-(2'-(methacryloyloxy)ethyl)ethylimminium inner salt (CBMA) monomer was synthesized according to the method described by Zhang et al. (Superlow Fouling Sulfobetaine and Carboxybetaine Polymers on Glass Slides, Langmuir, Vol. 22, no. 24, 2006, 10073). Gamma-propiolactone in dry acetone was added dropwise into a solution of 2-(N,N'-dimethylamino)ethyl methacrylate in anhydrous acetone and the reaction was stirred at 15 °C for 24 hours. The solvent was subsequently evaporated to obtain a viscous liquid of the CBMA monomer.

### Synthesis of polyCBMA

Free radical polymerization of the CBMA monomer was carried out in an aqueous medium using the method described by Lee et al. (Synthesis and solubility of the polCy(sulfobetaine)s and the corresponding cationic polymers: 1. Synthesis and characterization of sulphobetaines and the corresponding cationic monomers by nuclear magnetic resonance spectra, Polymer (1994), vol. 35, no. 10, 2210 - 2217). Potassium persulfate was used as an initiator and the polymerization was carried out in an inert atmosphere by stirring at 60 to 70 °C for 8 hours. Molecular weight of the CBMA homopolymer was in the range of 10,000 to 100,000. The polyCBMA was recovered in the form of a liquid having a water content of approximately 50 % by weight.

### Water clarification tests

Procedure: To one litre of dirty source water containing 0.2 g/l of soil (50 % by weight kaolinite and 50 % by weight iron(III) oxide), different amounts of the polyCBMA and polyacrylamide (MW=6 MDa, 70% acrylamide, 30% acrylic acid) were added as shown in Table 1. The water was stirred for 20 second, followed by a 20 second gap and a further 20 seconds stirring. The water was allowed to stand for a further two minutes. An aliquot of the water from the top was taken and turbidity measured using a Turbiquant® 2100T, Merck, turbidity meter. The results are shown in Table 1.

**Table 1**

| Test | PolyCBMA (ppm) | Polyacrylamide (ppm) | Turbidity (NTU) |
|---|---|---|---|
| 1.1 | 10 | 0 | 14 |
| 1.2 | 20 | 0 | 18 |
| 1.3 | 30 | 0 | 16 |
| 1.4 | 40 | 0 | 18 |
| 1.5 | 50 | 0 | 17 |
| 1.6 | 200 | 0 | 19 |
| 1.7 | 0 | 10 | 12 |
| 1.8 | 30 | 10 | 5.2 |
| 1.9 | 40 | 10 | 1.8 |
| 1.10 | 50 | 10 | 3.6 |

A turbidity value less than 10 is acceptable to consumers. As can be seen in Table 1, polyCBMA alone (tests 1.1 to 1.6) or anionic polyacrylamide alone (test 1.7) did not give sufficient flocculation. When both the polymers were present in appropriate levels (tests 1.8 to 1.10), water with acceptable turbidity was achieved.

### Example 2

A water clarification composition comprising 93.75 % by weight sand, 5 % by weight of polycarboxybetaine methacrylate and 1.25 % by weight of the anionic polyacrylamide was prepared by mixing, using the same polymers as in Example 1.

4.05 g of this formulation was added to 5 litres of dirty source water containing 0.2 g/l of soil (50 % by weight kaolinite and 50 % by weight iron(III) oxide). The water was stirred for 20 seconds, followed by a 20 second gap and a further 20 second stirring. The water was allowed to stand for a further two minutes. An aliquot of the water from the top was taken and turbidity was measured using a Turbiquant® 2100T, Merck, turbidity meter. A turbidity of 7 NTU was measured.

### Example 3

A powder water clarification composition comprising 93.75 % by weight of glucose (filler), 5 wt% of polycarboxybetaine methacrylate and 1.25 % by weight of the anionic polyacrylamide was prepared by mixing, using the same polymers as in Example 1. 4.05 g of the powder was added to dirty source water containing 0.2 g/l of soil (50 % by weight kaolinite and 50 % by weight iron(III) oxide). The water was stirred for 20 seconds, followed by a 20 second gap and a further 20 second stirring. The water was allowed to stand for a further two minutes. An aliquot of the water from the top was taken and turbidity was measured using a Turbiquant® 2100T, Merck, turbidity meter. A turbidity of 2.3 NTU was measured.

### Example 4

To one liter of dirty source water containing 0.2 g/l of soil (50 % by weight kaolinite and 50 % by weight iron(III) oxide), different amounts of the polyCBMA and polyacrylamide (MW=6 MDa, 70% acrylamide, 30% acrylic acid) were added as shown in Table 2. The water was stirred for 20 seconds, followed by a 20 second gap and a further 20 second stirring. The water was allowed to stand for a further two minutes. An aliquot of the water from the top was taken and turbidity measured using a Turbiquant® 2100T, Merck, turbidity meter. The results are shown in Table 2.

**Table 2**

| Anionicity of anionic polyacrylamide = 30% | | | | |
|---|---|---|---|---|
| Example | Polycarboxybetaine methacrylate (ppm) | Anionic polyacrylamide (ppm) | Turbidity after 2 minutes (NTU) | Turbidity after 10 minutes (NTU) |
| 1 | 800 | 1 | 25.2 | 20.2 |
| 2 | 10 | 800 | 22.4 | 18.4 |
| 3 | 40 | 10 | 1.8 | 1.2 |

### Example 5

In the following experiments, water (36FH) containing 0.2 g/l soil was treated with either of the two formulations.

**Table 3**

| Composition | Formulation | Turbidity (NTU) |
|---|---|---|
| A | 40 ppm pCBMA + 10 ppm anionic polyacrylamide + 760 ppm filler (pre mixed to form a powder) | 1.8 |
| B | 40 ppm pCBMA + 10 ppm anionic polyacrylamide (pre mixed to form a gel) | 25.6 |

It was found that in the filler containing formulation, the flocs formed well and lower final turbidity was obtained. However, in the case where there was no filler, formulation became a gel and did not form flocs in dirty source water resulting in higher final turbidity.

## Claims

1. A water clarification composition comprising:
(i) 0.1 to 50% by weight of dry matter of anionic polymeric flocculant;
(ii) 0.4 to 90% by weight of dry matter of an amphoteric polymer having a molecular weight of at least 5,000 Da, said amphoteric polymer being **characterized in that** at least 30%, preferably at least 50% of the monomeric units of the amphoteric polymer are betaine units represented by the following formula (I):
H₂C=C(R¹)-C(O)O-(CH₂)ₙ-N⁺(R²)(R³)-(CH₂)ₚ-X
where:
- R¹ represents a hydrogen atom or a linear or branched C₁ to C₆ alkyl group;
- R² and R³, independently of each other, represent an alkyl, hydroxyalkyl or aminoalkyl group in which the alkyl group is a linear or branched C₁ to C₆ alkyl;
- n is an integer in the range of 1 to 4;
- p is an integer in the range of 2 to 8;
- X represents COO⁻, SO₃⁻ or OSO₃⁻; and
(iii) 0 to 95 % by weight of dry matter of inert filler;
wherein the combination of the anionic polymer flocculant, the amphoteric polymer and the inert filler constitutes at least 50 % by weight, preferably at least 70 % by weight of the water clarification composition, wherein the amphoteric polymer exists in a ratio to the anionic polymer flocculant, wherein the ratio is selected from 3:1, 4:1, or 5:1, and wherein the inert filler contains at least 80 % by weight of one or more water-soluble components.

2. Water clarification composition according to claim 1, wherein the anionic polymeric flocculant is selected from polyacrylamides, polyacrylates and combinations thereof.

3. Water clarification composition according to claim 2, wherein the anionic polymeric flocculant is a copolymer of acrylamide and one or more anionic monomers selected from acrylic acid, methacrylic acid, 2-acrylamido-2-methylpropane sulphonic acid and salts thereof.

4. Water clarification composition according to any of claim 1 to 3, wherein the filler comprises a coating that contains the anionic polymeric flocculant and/or the amphoteric polymer.

5. Water clarification composition according to any of claims 1 to 4, wherein R¹ represents C₁ to C₃ alkyl.

6. Water clarification composition according to any of claims 1 to 5, wherein R² and R³, independently of each other, represent C₁ to C₃ alkyl.

7. Water clarification composition according to any of claims 1 to 6, wherein X represents COO⁻.

8. Water clarification composition according to any of claims 1 to 7, wherein the amphoteric polymer is a homopolymer.

9. Water clarification composition according to claim 8, wherein the composition comprises, calculated by weight of dry matter:
(i) 0.2 to 10 % by weight of the anionic polymeric flocculant;
(ii) 0.6 to 50 % by weight of the amphoteric polymer; and,
(iii) 45 to 99 % by weight water-soluble inert filler, wherein the amphoteric polymer exists in a ratio to the anionic polymer flocculant, and wherein the ratio is selected from 3:1, 4:1, or 5:1.

10. Water clarification composition according to any of claim 1 to 9, wherein the inert filler has a mass weighted mean particle size in the range of 5 to 500 micrometer, preferably in the range of 10 to 150 micrometer.

11. Water clarification composition according to any one of the preceding claims, wherein the composition contains less than 0.5 % by weight dry matter of a metal salt coagulant selected from aluminum sulfate, aluminum chloride, polyaluminum chloride, aluminum chlorohydrate, ferric sulfate, ferrous sulfate, ferric chloride and combinations thereof.

12. Process for clarifying water, said process comprising the steps of:
(i) dosing the water clarification composition according to any of claims 1 to 11, in a dose of 0.2 to 3 grams per liter of water to be clarified;
(ii) dispersing the water clarification composition throughout the water to be clarified to induce the formation of flocs; and,
(iii) separating the flocs from the water to obtain clarified water.

## Patentansprüche

1. Wasserklärungszusammensetzung, umfassend:
(i) 0,1 bis 50 Gew.-% Trockensubstanz von anionischem polymerem Flockungsmittel;
(ii) 0,4 bis 90 Gew.-% Trockensubstanz eines amphoteren Polymers mit einem Molekulargewicht von mindestens 5.000 Da, wobei das amphotere Polymer **dadurch gekennzeichnet ist, dass** mindestens 30%, bevorzugt mindestens 50%, der Monomereinheiten des amphoteren Polymers Betain-Einheiten sind, die durch die folgende Formel (I) dargestellt sind:
H₂C=C(R¹)-C(O)O-(CH₂)ₙN⁺(R²)(R³)-(CH₂)ₚ-X
worin:
- R¹ ein Wasserstoffatom oder eine lineare oder verzweigte C₁- bis C₆-Alkylgruppe darstellt;
- R² und R³ unabhängig voneinander eine Alkyl-, Hydroxyalkyl- oder Aminoalkylgruppe darstellen, in der die Alkylgruppe ein lineares oder verzweigtes C₁- bis C₆-Alkyl ist;
- n eine ganze Zahl im Bereich von 1 bis 4 ist;
- p eine ganze Zahl im Bereich von 2 bis 8 ist;
- X COO⁻, SO₃⁻ oder OSO₃⁻ darstellt; und
(iii) 0 bis 95 Gew.-% Trockensubstanz von inertem Füllstoff;
wobei die Kombination des anionischen polymeren Flockungsmittels, des amphoteren Polymers und des inerten Füllstoffs mindestens 50 Gew.-%, bevorzugt mindestens 70 Gew.-%, der Wasserklärungszusammensetzung ausmacht, wobei das amphotere Polymer in einem Verhältnis zum anionischen polymeren Flockungsmittel vorliegt, wobei das Verhältnis ausgewählt ist aus 3:1, 4:1 oder 5:1, und wobei der inerte Füllstoff mindestens 80 Gew.-% einer oder mehrerer wasserlöslicher Komponenten enthält.

2. Wasserklärungszusammensetzung nach Anspruch 1, wobei das anionische polymere Flockungsmittel ausgewählt ist aus Polyacrylamiden, Polyacrylaten und Kombinationen davon.

3. Wasserklärungszusammensetzung nach Anspruch 2, wobei das anionische polymere Flockungsmittel ein Copolymer von Acrylamid und einem oder mehreren anionischen Monomeren ist, die ausgewählt sind aus Acrylsäure, Methacrylsäure, 2-Acrylamido-2-methylpropansulfonsäure, und Salzen davon.

4. Wasserklärungszusammensetzung nach irgendeinem der Ansprüche 1 bis 3, wobei der Füllstoff eine Beschichtung umfasst, die das anionische polymere Flockungsmittel und/oder das amphotere Polymer enthält.

5. Wasserklärungszusammensetzung nach irgendeinem der Ansprüche 1 bis 4, wobei R¹ C₁- bis C₃-Alkyl darstellt.

6. Wasserklärungszusammensetzung nach irgendeinem der Ansprüche 1 bis 5, wobei R² und R³ unabhängig voneinander C₁- bis C₃-Alkyl darstellen.

7. Wasserklärungszusammensetzung nach irgendeinem der Ansprüche 1 bis 6, wobei X COO⁻ darstellt.

8. Wasserklärungszusammensetzung nach irgendeinem der Ansprüche 1 bis 7, wobei das amphotere Polymer ein Homopolymer ist.

9. Wasserklärungszusammensetzung nach Anspruch 8, wobei die Zusammensetzung, berechnet auf das Gewicht der Trockensubstanz, umfasst:
(i) 0,2 bis 10 Gew.-% des anionischen polymeren Flockungsmittels;
(ii) 0,6 bis 50 Gew.-% des amphoteren Polymers; und
(iii) 45 bis 99 Gew.-% wasserlöslichen inerten Füllstoff, wobei das amphotere Polymer in einem Verhältnis zum anionischen polymeren Flockungsmittel vorliegt und wobei das Verhältnis aus 3:1, 4:1 oder 5:1 ausgewählt ist.

10. Wasserklärungszusammensetzung nach irgendeinem der Ansprüche 1 bis 9, wobei der inerte Füllstoff eine massegewichtete mittlere Teilchengröße im Bereich von 5 bis 500 Mikrometer, bevorzugt im Bereich von 10 bis 150 Mikrometer, aufweist.

11. Wasserklärungszusammensetzung nach irgendeinem der vorhergehenden Ansprüche, wobei die Zusammensetzung weniger als 0,5 Gew.-% Trockensubstanz eines Metallsalz-Koagulationsmittels enthält, das aus Aluminiumsulfat, Aluminiumchlorid, Polyaluminiumchlorid, Aluminiumchlorhydrat, Eisen (III)-sulfat, Eisen (II)-sulfat, Eisen (III)-chlorid und Kombinationen davon ausgewählt ist.

12. Verfahren zum Klären von Wasser, wobei das Verfahren die folgenden Schritte umfasst:
(i) Dosieren der Wasserklärungszusammensetzung nach irgendeinem der Ansprüche 1 bis 11 in einer Dosis von 0,2 bis 3 Gramm pro Liter zu klärendem Wasser;
(ii) Dispergieren der Wasserklärungszusammensetzung in dem zu klärenden Wasser, um die Bildung von Flocken zu induzieren; und
(iii) Trennen der Flocken von dem Wasser, um geklärtes Wasser zu erhalten.

## Revendications

1. Composition de clarification d'eau comprenant :
(i) de 0,1 à 50 % en masse de matière sèche de floculant polymère anionique ;
(ii) de 0,4 à 90 % en masse de matière sèche d'un polymère amphotère présentant une masse moléculaire d'au moins 5 000 Da, ledit polymère amphotère étant **caractérisé en ce que** au moins 30 %, de préférence au moins 50 % des unités monomères du polymère amphotère sont des unités de bétaïne représentées par la formule (I) suivante :
H₂C=C(R¹)-C(O)O-(CH₂)ₙ-N⁺(R²)(R³)-(CH₂)ₚ-X
où :
- R¹ représente un atome d'hydrogène ou un groupe alkyle en C₁ à C₆ linéaire ou ramifié ;
- R² et R³, indépendamment l'un de l'autre, représentent un groupe alkyle, hydroxyalkyle ou aminoalkyle dans lequel le groupe alkyle est un groupe alkyle en C₁ à C₆ linéaire ou ramifié ;
- n est un nombre entier dans l'intervalle de 1 à 4 ;
- p est un nombre entier dans l'intervalle de 2 à 8 ;
- X représente COO⁻, SO₃⁻ ou OSO₃⁻ ; et
(ii) de 0 à 95 % en masse de matière sèche de charge inerte ; dans laquelle la combinaison du floculant polymère anionique, du polymère amphotère et de la charge inerte constitue au moins 50 % en masse, de préférence au moins 70 % en masse de la composition de clarification d'eau, dans laquelle le polymère amphotère existe dans un rapport au floculant polymère anionique, dans laquelle le rapport est choisi parmi 3:1, 4:1, ou 5:1, et dans laquelle la charge inerte contient au moins 80 % en masse d'un ou plusieurs constituants solubles dans l'eau.

2. Composition de clarification d'eau selon la revendication 1, dans laquelle le floculant polymère anionique est choisi parmi des polyacrylamides, polyacrylates et combinaisons de ceux-ci.

3. Composition de clarification d'eau selon la revendication 2, dans laquelle le floculant polymère anionique est un copolymère d'acrylamide et d'un ou plusieurs monomères anioniques choisis parmi l'acide acrylique, l'acide méthacrylique, l'acide 2-acrylamino-2-méthylpropanesulfonique et des sels de ceux-ci.

4. Composition de clarification d'eau selon l'une quelconque des revendications 1 à 3, dans laquelle la charge contient un revêtement qui contient le floculant polymère anionique et/ou le polymère amphotère.

5. Composition de clarification d'eau selon l'une quelconque des revendications 1 à 4, dans laquelle R¹ représente un groupe alkyle en C₁ à C₃.

6. Composition de clarification d'eau selon l'une quelconque des revendications 1 à 5, dans laquelle R² et R³, indépendamment l'un de l'autre, représentent un groupe alkyle en C₁ à C₃.

7. Composition de clarification d'eau selon l'une quelconque des revendications 1 à 6, dans laquelle X représente COO⁻.

8. Composition de clarification d'eau selon l'une quelconque des revendications 1 à 7, dans laquelle le polymère amphotère est un homopolymère.

9. Composition de clarification d'eau selon la revendication 8, dans laquelle la composition comprend, calculé en masse de matière sèche :
(i) de 0,2 à 10 % en masse du floculant polymère anionique ;
(ii) de 0,6 à 50 % en masse du polymère amphotère ; et,
(iii) de 45 à 99 % en masse de charge inerte soluble dans l'eau, dans laquelle le polymère amphotère existe dans un rapport au floculant polymère anionique, et dans laquelle le rapport est choisi parmi 3:1, 4:1, ou 5:1.

10. Composition de clarification d'eau selon l'une quelconque des revendications 1 à 9, dans laquelle la charge inerte présente une taille moyenne de particule pondérée en masse dans l'intervalle de 5 à 500 micromètres, de préférence dans l'intervalle de 10 à 150 micromètres.

11. Composition de clarification d'eau selon l'une quelconque des revendications précédentes, dans laquelle la composition contient moins de 0,5 % en masse de matière sèche d'un coagulant de sel de métal choisi parmi le sulfate d'aluminium, le chlorure d'aluminium, le poly(chlorure d'aluminium), le chlorohydrate d'aluminium, le sulfate ferrique, le sulfate ferreux, le chlorure ferrique et des combinaisons de ceux-ci.

12. Procédé pour la clarification d'eau, ledit procédé comprenant les étapes de :
(i) dosage de la composition de clarification d'eau selon l'une quelconque des revendications 1 à 11, dans une dose de 0,2 à 3 grammes par litre d'eau à clarifier ;
(ii) dispersion de la composition de clarification d'eau dans l'ensemble de l'eau à clarifier pour induire la formation de flocons ; et
(iii) séparation des flocons de l'eau pour obtenir de l'eau clarifiée.
